# EUROPÄISCHE PATENTANMELDUNG

(11) **EP 0 563 532 A1**
(43) Veröffentlichungstag der Anmeldung: **06.10.1993**
(21) Anmeldenummer: 93101645.5
(22) Anmeldetag: 03.02.1993
(51) Int. Cl.: C08J 11/08, C08J 11/06, C08L 25/06

(54) **Verfahren zum Kompaktieren von expandiertem Polystyrol**

(30) Priorität: 28.03.1992 DE 4210237
(71) Anmelder: Van den Wittenboer, Jan, NL-7552 HE Hengelo (NL)
(72) Erfinder: Van den Wittenboer, Jan, NL-7552 HE Hengelo (NL)
(74) Vertreter: Habbel, Hans-Georg, Dipl.-Ing.

(57) **Zusammenfassung**

Die Erfindung betrifft ein Verfahren zum Kompaktieren von expandiertem Polystyrol sowie zum anschließenden thermischen Abbau der so gebildeten Masse zu chemischen Rohstoffen, wobei das EPS mit Aceton oder einem Gemisch aus Flüssigkeiten in Berührung gebracht wird, das die expandierte Struktur verdichtet und mit dem Polymer eine mehr oder weniger viskose Paste bildet.

## Beschreibung

Die Erfindung bezieht sich auf ein Verfahren gemäß dem Oberbegriff des Hauptanspruches.

Die Erfindung bezieht sich auf expandiertes Polystyrol, auch "EPS" genannt. Geschäumtes Polystyrol hat ein weites Anwendungsgebiet, wie z. B. Wärme- und Schallisolierung, Absorption von Vibrationen und Stößen, Leichtgewichtsstrukturmaterial in Sandwichpaneelen und Transportverpackungen, Verpackungsschaumstücke ("Chips"), Polster und Matratzen usw.

Dieses geschäumte Polystyrol ist besonders dann problematisch, wenn es zu Abfall geworden ist, da sich aus seiner voluminösen Struktur hohe Logistikkosten pro Tonne abzuführender Polymermasse ergeben. So enthält eine ganze Fracht expandierten Polystyrols mit einer durchschnittlichen Dichte von 25 kg/m² nur 800 bis 1000 kg Polystyrol.

Eine Volumenreduktion kann auf mechanischem Wege durchgeführt werden, z. B. durch Zusammenpressen, Behandlung zwischen Kompaktierwalzen etc. Derartige Vorrichtungen, insbesondere Kompaktieranlagen mit Walzen, sind kostspielig und benötigen relativ viel Energie. Weiterhin arbeiten diese Systeme bei der Kompaktierung elastischer Schäume nicht oder nur unzureichend. Ein weiterer Nachteil dieser Systeme ist, daß es schwierig ist, umweltbelastende Blähmittel wie CFK's während des Kompaktierens daran zu hindern, in die Umwelt zu entweichen.

Aus der DE-C1 37 41 777 ist ein Verfahren zur Aufbereitung von Kunststoffabfällen auf Polystyrolbasis bekanntgeworden, bei welchem die Kunststoffabfälle mit einem Lösungsmittel behandelt werden, in dem diese Kunststoffabfälle lösbar sein sollen, wobei die so erzielte Lösung als Klebemittel verwendet wird. Obgleich reines Polystyrol in Aceton nicht lösbar ist, wird Aceton in dieser Literaturstelle mit erwähnt. Der Begriff "Polystyrolbasis" umfaßt auch sogenanntes "ABS" (eine Kurzbezeichnung für Acrylnitril-Butadien-Styrol-Copolymer), und aus diesem Werkstoff werden in großem Umfang durch Spritzguß u. a. auch Spielwaren hergestellt, auf die sich die Beispiele 5 und 6 der DE-C1 37 41 777 beziehen. Da reines Polystyrol in Aceton nicht lösbar ist, ist dieser Vorschlag gemäß der DE-C1 37 41 777 für reinen Polystyrolschaum nicht anwendbar.

Auch wasserhaltiges Aceton übt keinerlei Einfluß auf reines Polystyrol aus.

Außerdem ist es aus der DE-A1 31 13 125 bekannt, Styropor in normalem Fleckenwasser aufzulösen, um somit einen Klebstoff zu schaffen.

Aus der DE-A1 23 03 754 ist es schließlich bekannt, Polystyrolhartschaum mit chlorierten, aliphatischen und/oder alicyclischen chlorierten Lösungsmitteln bei erhöhter Temperatur zu behandeln, um somit eine Klebmasse zu erreichen, die sich insbesondere zum Verkleben von Teilen aus Polystyrolhartschaum eignet.

Der Erfindung liegt die Aufgabe zugrunde, den Transport und den Abbau insbesondere von als Abfall vorliegendem geschäumtem Polystyrol kostengünstig und umweltschonend zu bewerkstelligen, auch wenn der Polystyrolschaum Wasser enthält.

Die Aufgabe wird durch die Lehre des Hauptanspruches gelöst.

Vorteilhafte Ausführungen des erfindungsgemäßen Verfahrens werden in den Unteransprüchen erläutert.

Die Erfindung geht insbesondere von der Überlegung aus, daß die Matrixstruktur des expandierten Polystyrols in einfacher Weise zerstört werden kann, wenn diese expandierte Struktur mit einer Flüssigkeit in Kontakt gebracht wird, die letztendlich nur eine aufweichende und/oder anquellende Wirkung auf die Oberfläche der Struktur auszuüben brauchen.

Eine völlig auflösende Wirkung ist unnötig und sogar unerwünscht, wie in den nachfolgenden Beispielen erläutert werden wird.

Das expandierte Polystyrol besitzt eine verhältnismäßig große innere Oberfläche in bezug auf das Polymervolumen.

Die dünnen polymeren Strukturelemente werden unter dem Einfluß der Flüssigkeit angeweicht und angequollen. Unter dem Einfluß von Kohäsionskräften, Relaxationseffekten in den ausgedehnten Polymerketten, Oberflächenspannung usw. werden die Strukturelemente nachgeben und sich zusammenziehen, wodurch die eingeschlossenen Gase entweder ausgetrieben werden, wie es beispielsweise bei Luft und Stickstoff der Fall ist, oder aber in der Flüssigkeit gelöst werden, so daß die schadhaften Fluorchlorkohlenwasserstoffe (CFK's) nicht in die Umwelt gelangen.

Es entsteht eine mehr oder weniger pumpfähige Masse oder Teig mit hochviskosen Eigenschaften. Die gewonnene kompaktierte Masse ist ganz oder beinahe ganz frei von eingeschlossenen Gasen, zumindest von in der Gasphase befindlichen Komponenten.

Die Erfindung wird anschließend anhand verschiedener Beispiele erläutert und beschrieben.

Aceton ist kein echtes Lösungsmittel, kann aber Polystyrol oberflächlich anweichen. Für expandiertes Polystyrol (EPS) reicht dies dazu aus, die Strukturelemente völlig zu labilisieren, wodurch die expandierte Struktur ganz aufgehoben wird (Beispiel 1). Weil das Polystyrol nicht wirklich in Lösung geht, wird die Menge des Aceton nicht zu Solvatationseffekten benötigt, so daß es ganz zum Einwirken auf neu zugeführtes EPS zur Verfügung gehalten wird.

Sobald das Aceton einige Prozent Wasser enthält (Beispiel 2), wird der labilisierende Effekt in bezug auf das EPS stark herabgesetzt und sogar völlig aufgehoben (Beispiel 3). Offenbar ist die Affinität von Aceton zu Wasser sehr viel stärker als zu EPS.

In der Alltagspraxis wird es nicht oder nur schwierig zu verhindern sein, daß mit dem zugeführten EPS auch eine gewisse Menge an Wasser in das Aceton gelangt. Dies ist der Fall, da die Abfallmasse ja nicht immer garantiert völlig trocken ist.

Um dieses Problem zu beseitigen, wird vorgeschlagen, durch Zugabe von Monostyrol die Aktivität des Aceton in bezug auf das EPS wieder ganz herzustellen (Beispiel 4), wenn sich die Aufnahmekapazität für EPS geringfügig herabgesetzt hat und außerdem eine Phasentrennung stattfindet, bei der sich über der viskosen Polymermasse ein Gemisch aus Aceton und Wasser bildet.

Offenbar funktioniert hier das Monostyrol als Vermittler. Die EPS-Matrix erkennt das Monostyrol als chemisch verwandt, nimmt es aus dem Gemisch auf und destabilisiert. Obwohl das Monostyrol ein wirkliches Lösungsmittel für das Polystyrol ist, findet eine völlige Auflösung nicht statt. Offenbar stehen die drei Komponenten Aceton, Monostyrol und EPS in einem derartigen Verhältnis zueinander, daß dem Aceton wie vorher seine Kompaktierfähigkeit erhalten bleibt.

Die Preferenz von Aceton zum Wasser bleibt ebenfalls erhalten.

Sobald die Aceton-Phase mit soviel Wasser angereichert wurde, daß das Verhältnis von freiem Aceton zu Wasser einen bestimmten Wert unterschritten hat, hört der Prozeß jedoch endgültig auf.

Weil Monostyrol ein gutes Lösungsmittel für Polystyrol ist, wurde untersucht, ob das Phänomen der Reaktivierung aus Beispiel 4 auch mit anderen Lösungsmitteln möglich ist. Dazu wurden die folgenden Experimente durchgeführt:
Butanon, das auch ein sehr gutes Lösungsmittel für Polystyrol ist, ist mit Wasser mischbar und ist daher zur Reaktivierung von Aceton unfähig (Beispiel 5).

Bei einer Dreizahl nicht mit Wasser mischbarer Lösungsmittel, nämlich Ethylacetat, MethylIsoButylKeton und 1, 1, 1-Trichloräthan, zeigt sich nur 1, 1, 1-Trichloräthan dazu fähig, eine gewisse Wiederherstellung der Aktivität zu erreichen, jedoch bei weitem nicht in dem Maße, wie sie bei Monostyrol beobachtet wurde (Beispiel 6).

Ein Beispiel für die Anwendung des erfindungsgemäßen Verfahrens ist in Beispiel 7 erläutert, wobei die viskose Masse in einen Behandlungskessel gepumpt wird und anschließend darin einer Pyrolyse unterworfen wird. Aus dem flüssigen Teil des Pyrolysates werden dann chemische Rohstoffe erhalten, wobei das Aceton nahezu völlig wiedergewonnen wird und wobei das Monostyrol eine ausreichende Reinheit erhält, um es beispielsweise anschließend wieder zur Polymerisation einzusetzen.

### Beispiel 1:

Beispiel 1 betrifft die Wirkung von Aceton auf reines EPS.

Zu 100 g Aceton (Propanon, Dimethylketon) wird EPS gegeben. Das EPS wird sehr schnell aufgenommen, jedoch entsteht in diesem Fall keine Lösung, sondern eine hochviskose Paste mit einer aufliegenden Schicht aus Aceton, die frei von Polystyrol ist und aus diesem Grunde hochaktiv bleibt, um unverändert EPS sehr schnell aufzunehmen, bis sämtliches Aceton verbraucht worden ist.

Dann hat sich eine Paste gebildet, die 85 - 90 g Polystyrol enthält. Diese Polystyrolmenge wird von keinem einzigen echten Lösungsmittel auch nur annähernd erreicht.

### Beispiel 2:

Beispiel 2 betrifft einen Einfluß von Wasser auf die Aktivität von Aceton.

Zu 100 g Aceton wird 5 g Wasser und weiteres EPS gegeben.

Es zeigt sich, daß durch Zugabe von Wasser die Aktivität von Aceton stark zurückgeht; das EPS wird zwar noch aufgenommen, jedoch geschieht dies viel langsamer und außerdem bildet sich nicht mehr eine hochviskose Paste.

### Beispiel 3:

Beispiel 3 betrifft durch eine Überdosis von Wasser inaktiviertes Aceton.

Zu 100 g Aceton wird 17,5 g Wasser gegeben. Das Aceton verhält sich im Hinblick auf das EPS völlig inaktiv und ist daher zu den oben genannten Zwecken unbrauchbar.

### Beispiel 4:

Beispiel 4 betrifft die Herabsetzung der inaktivierenden Auswirkungen von Wasser bezüglich Aceton durch Zugabe von Monostyrol.

Zu einem Gemisch aus 72 g Aceton und 28 g Monostyrol wird 17,5 g Wasser hinzugegeben.

Die Aktivität des Gemisches in bezug auf EPS ist jetzt ganz wiedererhalten worden, als wäre kein Wasser zugegeben worden. Das Gemisch ist jetzt dazu fähig, zügig 70 - 75 g EPS aufzunehmen.

Jedoch tritt hier eine Phasentrennung ein, da die Polystyrolphase mehr viskos ist als bei der Anwendung reinen Acetons, und es entsteht eine Oberschicht aus einem Gemisch aus Aceton und Wasser (zusammen ca. 35 g).

### Beispiel 5:

Beispiel 5 betrifft den Einfluß von einem mit Wasser mischbaren Lösungsmittel auf inaktiviertes Aceton. Zu einem Gemisch aus 72 g Aceton und 28 g Butanon wird 17,5 g Wasser zugegeben. Dieses Gemisch ist in bezug auf EPS völlig inaktiv.

### Beispiel 6:

Beispiel 6 betrifft den Einfluß von nicht mit Wasser mischbaren Lösungsmitteln auf inaktiviertes Aceton, mit Ausnahme von Monostyrol.
- a.): 72 g Aceton + 28 g Ethylacetat + 17,5 g Wasser ergibt wenig Aktivität in bezug auf EPS,
- b.): 72 g Aceton + 28 g MethylIsoButhylKeton + 17,5 g Wasser ergibt wenig Aktivität in bezug auf EPS und
- c.): 72 g Aceton + 28 g 1, 1, 1-Trichloräthan + 17,5 g Wasser ergibt eine ziemliche Aktivität in bezug auf EPS; jedoch kann diese nicht mit der von Monostyrol verglichen werden und es wird nur 35 - 40 g EPS aufgenommen.

### Beispiel 7:

Beispiel 7 betrifft die Verarbeitung zu chemischen Rohstoffen.

Zu 400 g Aceton wird EPS bis zur Sättigung gegeben, d. h. 360 g. Dabei entstehen 760 g Paste.
570 g dieser Paste wurden einer Pyrolyse unterworfen, wodurch 550 g Pyrolyse-Öl erhalten wurden.

Die Zerlegung dieses Materials in einer Rektifiziersäule liefert:
53 Gew.-% Aceton-Fraktion zur Wiederverwendung gemäß der Erfindung,
23 Gew.-% Monostyrol,
10 Gew.-% übriger Destillate mit Siedepunkten bis zu 155^{o} C,
14 Gew.-% Rückstände mit Siedepunkten über 155^{o} C.

Das Monostyrol läßt sich gut zu glasklarem Polystyrol polymerisieren.

## Patentansprüche

1. Verfahren zum Kompaktieren von expandiertem Polystyrol, dadurch gekennzeichnet, daß der Polystyrolschaum mit Aceton in Berührung gebracht wird, wodurch die expandierte Struktur des Polystyrolschaumes kompaktiert und aus dem expandierten Polystyrolschaum eine mehr oder weniger viskose Paste od. dgl. gebildet wird.

2. Verfahren nach Anspruch 1, dadurch gekennzeichnet, daß der Polystyrolschaum mit einem Gemisch von Aceton und Monostyrol in Berührung gebracht wird.

3. Verfahren nach Anspruch 2, dadurch gekennzeichnet, daß in dem Gemisch aus Aceton und Monostyrol 40 Gew.-% Monostyrol enthalten sind.
